# EUROPEAN PATENT SPECIFICATION

(11) **EP 3 781 491 B1**
(45) Date of publication and mention of the grant of the patent: **12.04.2023**
(21) Application number: 19716424.7
(22) Date of filing: 12.04.2019
(51) Int. Cl.: B65D 25/24, B65D 71/00, B65D 25/30, B65G 61/00, B65D 19/00, B65D 19/44, B65D 21/02, B65D 85/06, B25J 15/02, B25J 15/08, B25J 19/02, B29D 30/00, B29B 17/02

(54) **SYSTEM FOR PROCESSING PRODUCTS RECOVERED FOR REUSE**
SYSTEM ZUR VERARBEITUNG VON ZUR WIEDERVERWENDUNG WIEDERGEWONNENEN PRODUKTEN
SYSTÈME DE TRAITEMENT DE PRODUITS RÉCUPÉRÉS EN VUE D'UNE RÉUTILISATION

(30) Priority: 19.04.2018 FR 1853438
(43) Date of publication of application: 24.02.2021
(73) Proprietor: COMPAGNIE GENERALE DES ETABLISSEMENTS MICHELIN, 63000 Clermont-Ferrand (FR)
(72) Inventor: DRAKE, Anthony, 63040 CLERMONT-FERRAND Cedex 9 (FR); RICCIARDI, James, 63040 CLERMONT-FERRAND Cedex 9 (FR); ANNET, Pierre, 63040 CLERMONT-FERRAND Cedex 9 (FR)
(74) Representative: Roussy, Delphine
(86) International application number: PCT/EP2019/059397
(87) International publication number: WO 2019/201763

(56) References cited:
- EP-A1- 3 064 325
- DD-A1- 219 721
- DE-A1- 19 926 311
- DE-U1- 8 814 914
- FR-A1- 2 686 317
- US-A1- 2014 142 751

## Description

### TECHNICAL FIELD

The invention relates in general to the production of rubber mixtures and of vehicle tyres produced therefrom. More particularly, the invention relates to the processing and the management of the loading and reloading of pallets with containers of products recovered for reuse as feedstock products in a mixing cycle.

### CONTEXT

In the field of tyre manufacture, there are a number of machines that produce semi-finished products. The products produced by these machines are made up of at least two rubber mixtures having different properties (referred to hereinafter as "complexed products"). The machines perform various processes, including extrusion processes, assembly processes and stripping processes, in which some of what is manufactured cannot be used directly in the creation of a tyre (for example, during a change in size, a start-up, etc.). During start-ups, stoppages, changes in size and other known steps, it is commonplace for these machines to generate products that are not used downstream (for example, on the assembly machines). Likewise, on these machines for assembling tyres using the complexed products produced beforehand (for example, machines known by the trade name VMI MAXX^{™}), products used by these machines cannot be put to use immediately on the production line. For example, the dimensional tolerances have not been met.

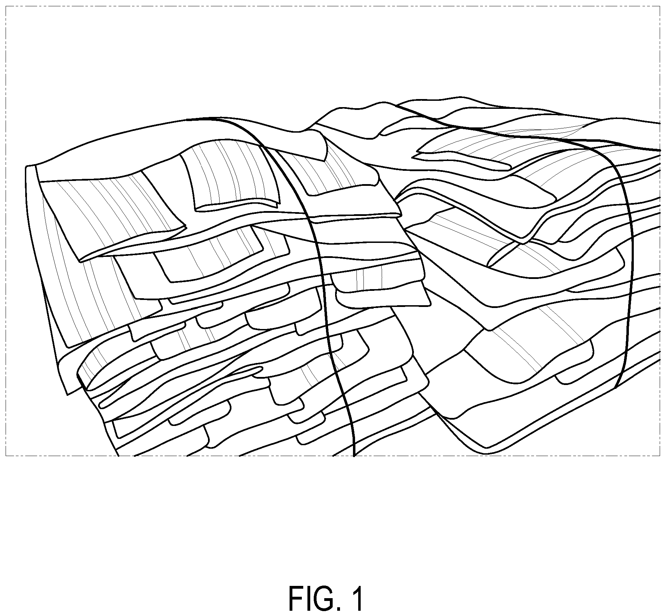

The complexed products that are not used as-is, but that can be recovered for reuse after treatment (referred to hereinafter as "products recovered for reuse" or "recovered products"), are usually stored without any special consideration. Reference is made to Figure 1 that shows an example of a usual format in which strips of complexed products are arranged in piles with no regard to the properties of the different complexed products. The complexed products, having different properties that are not precisely known, are neither packaged nor identified nor weighed nor managed. Thus, complexed products of various natures and various origins may find themselves in the same pile, on adjacent pallets, and even on the same pallet. This type of storage does not allow management of properties of the complexed products obtained within a pallet.

Certain prior art is generally directed to the storage of products destined for incorporation in tires and tire products (see, for example, FR2686317B1 directed to storage and gestion of finished tires in a vertical position). Certain prior art is generally directed to the storage and transport of various tools and workpieces without any reference to rubber mixing or the recovery of complexed rubber products for reuse in a later rubber mixing process (see, for example, DE19926311, DE8814914U1 and DD219721A1). Certain prior art is directed to robotic manipulators without reference to their incorporation into systems of for processing, identifying and storing recovered complexed products for resue in a rubber mixing cycle (see, for example, EP3064325 and US2014/142751A1).

The present invention relates to the at-source processing of products recovered for reuse to allow handling to be fully automated. The products recovered for reuse originating from different processes are packaged in containers and managed with pallets of containers of products recovered for reuse to facilitate their processing, their identification and their storage. The products recovered for reuse are therefore always available for use in rubber mixtures.

### SUMMARY

The invention relates to a system according to claim 1.

In certain embodiments, the system includes two or more stacked containers such that an outer surface of the support of a container above is adjacent to the inner surface of the longer side of a container below. In such embodiments, the ledge engages the shoulder beside the radius.

In certain embodiments, in a transverse direction, an approach clearance is defined between an end of the support of a container above and an end of the long side of a container below, and a positioning clearance is defined between a portion of the support, adjacent to the radius 16a, of the container above, and an adjacent portion of the inner surface of the long side of the container below. In a longitudinal direction, an approach clearance is defined between the lower edge of the short side of the container above and the inner surface of the short side of the container below, and a positioning clearance is defined between the outer surface of the short side of the container above, and the inner surface of the short side of the container below.

In certain embodiments, multiple containers are stacked such that the bearing surface of each berm engages a shoulder of a container; each crosspiece engages another shoulder of a corresponding container that is not yet engaged by a berm; and each crosspiece engages the two shoulders of a container that is not yet engaged. In certain such embodiments, in a transverse direction, an approach clearance is defined between one end of the foot and an inner edge of the berm, and a positioning clearance is defined between the support of a container engaged by a berm and the pallet. In a longitudinal direction, an approach clearance is defined between an inner edge of the ridge and the lower edge of the short side of each container.

In certain embodiments, the system includes an identification and gripping system having an identification and gripping means that works with an automated handling device. In certain such embodiments, the automated handling device includes a gripper having a longitudinal arm of predetermined length defined by two opposite ends; a vertical arm that extends from each end and incorporates an automated reader; and an element that extends from a free end at the bottom of the vertical arm and into which the automated reader is incorporated.

In certain embodiments, the identification and gripping means of the identification and gripping system includes a tag incorporated into the exterior surface of each short side of the container that allows the container to be identified by the corresponding reader positioned on the gripper. The identification and gripping means also includes a system of corresponding recesses and projections, with the recesses incorporated into the exterior surface of each short side of the container and the projections being incorporated into the element of the gripper, such that the identification and gripping system allows the container to be suitably positioned by aligning a projection in a corresponding recess. In certain such embodiments, the reader is an RFID reader and the tag is an RFID tag.

In certain embodiments, the system includes a storage system for the storage of products recovered for reuse, in which system containers full of products recovered for reuse are identified and stored according to their natures, the properties of which are known. In certain such embodiments, the system for the storage of products recovered for reuse includes an automated storage system.

In certain embodiments, the system also includes an identification means for harmonizing the identification of a pallet with the identification of the containers stored on the pallet.

Further aspects of the invention will become obvious from the following detailed description.

### BRIEF DESCRIPTION OF THE DRAWINGS

The nature and various advantages of the invention will become more evident from reading the detailed description that follows, and from studying the attached drawings, in which the same reference numerals denote identical parts throughout, and in which:
Figure 1 represents a known format of the complexed products originating from at least one manufacturing system.
Figure 2 represents a top view, and Figure 3 represents a perspective view, of a container intended to receive a corresponding product recovered for reuse.
Figure 4 represents a cross-sectional view, and Figure 5 represents a partial view, of a pair of containers of Figures 2 and 3 stacked one on top of another.
Figure 6 represents a longitudinal sectional view, and Figure 7 represents a partial view, of the stacked containers of Figures 4 and 5.
Figure 8 represents a perspective view of a gripper used with the container of Figures 2 and 3.
Figure 9 represents a partial view of the gripper of Figure 8.
Figure 10 represents a partial view of the gripper of Figures 8 and 9 during engagement with the container of Figures 2 and 3.
Figure 11 represents a perspective view of the gripper of Figures 8 and 9 during transfer of the container of Figures 2 and 3.
Figure 12 represents a schematic view of the centring of an identification and gripping means for transferring the container of Figures 2 and 3.
Figure 13 represents a perspective view of several containers stacked on a pallet.
Figure 14 represents a perspective view of one embodiment of the pallet of Figure 13.
Figure 15 represents a cross-sectional view, and Figure 16 represents a partial view, of the pallet of Figure 14 with containers of Figures 2 and 3 stacked thereon.
Figure 17 represents a longitudinal sectional view, and Figure 18 represents a partial view, of the pallet and the stacked containers of Figures 15 and 16.
Figure 19 represents a partial perspective view of a container system with a stacking device.

### DETAILED DESCRIPTION

Referring now to the figures, in which the same numerals identify identical elements, the invention is directed to a system of processing products recovered for reuse originating from at least one complexed-product manufacturing system. The system includes one or more containers 10 filled with recovered products. The system also includes one or more pallets 40 upon which the containers are aligned and stacked.

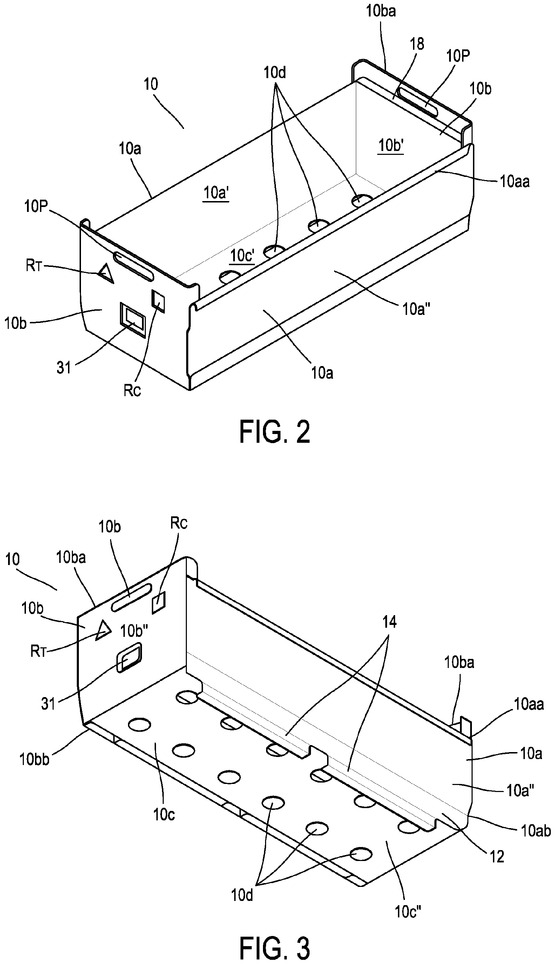

Figures 2 and 3 show one example of a container (or "bucket") 10 in which a corresponding recovered product is stored for reuse. The unused complexed products are identified into various kinds and various grades, and each kind and each grade designates a specific complexed product, the properties of which are known. In order to ensure a product recovered for reuse that has controlled properties, there are various natures of complexed products that will be used in rubber mixtures that are used later in a mixing process. In the description, the various kinds, grades, batches of complexed products will be designated by the term "nature" of complexed product.

Each product recovered for reuse is stored in a corresponding container 10, and each container contains only one single type of recovered product at any one time. The filling of each container 10 is performed in such a way that its volume is more or less constant. In order to control the specific properties of a planned mixture, each product recovered for reuse is placed in a corresponding container 10 that is designated to receive it. The container 10 and its contents (namely, a product recovered for reuse having known properties) are identified, known and managed by virtue of an identification means incorporated into the container 10. Identification of the container 10 is performed either manually (for example, using at least one visual and/or tactile identifier) or automatically (for example using numerals, codes, RFID identifications, hypertext links or equivalent means). The invention is described in relation to an RFID identification incorporated into the container 10, but it is understood that other equivalent means of identification can be used.

Referring again to Figures 2 and 3, each container 10 comes with a pair of opposite long sides 10a, and each long side has an interior surface 10a' and an exterior surface 10a" that coincide with an upper edge 10aa and a lower edge 10ab of the long side. Each container 10 also comes with a pair of opposite short sides 10b, and each short side has an interior surface 10b' and an exterior surface 10b" that coincide with an upper edge 10ba and a lower edge 10bb of the short side. A perimeter is formed by the lower edges 10ab, 10bb, along which a bottom 10c is assembled. The bottom 10c has an interior surface 10c' that receives the complexed products (that become the products recovered for reuse as described hereinbelow) and an exterior surface 10c". Several orifices 10d are aligned along the length of the bottom 10c of the container 10. The interior surfaces 10a' of the long sides 10a, the interior surfaces 10b' of the short sides 10b and the interior surface 10c' of the bottom 10c together form a volume to receive a specific product recovered for reuse.

In one embodiment of the container 10, the interior surface 10a' of each long side 10a is inclined with respect to the bottom 10c (for example, by an angle of up to 5°) in order to ensure release of the product recovered for reuse from the full container. An optional non-stick coating may be applied to the interior surfaces 10a', 10b', 10c' in order to facilitate extraction of the complexed product from the corresponding container.

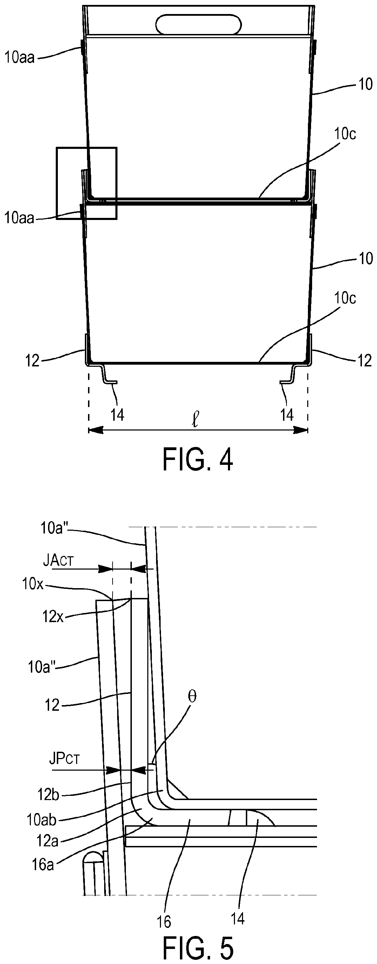

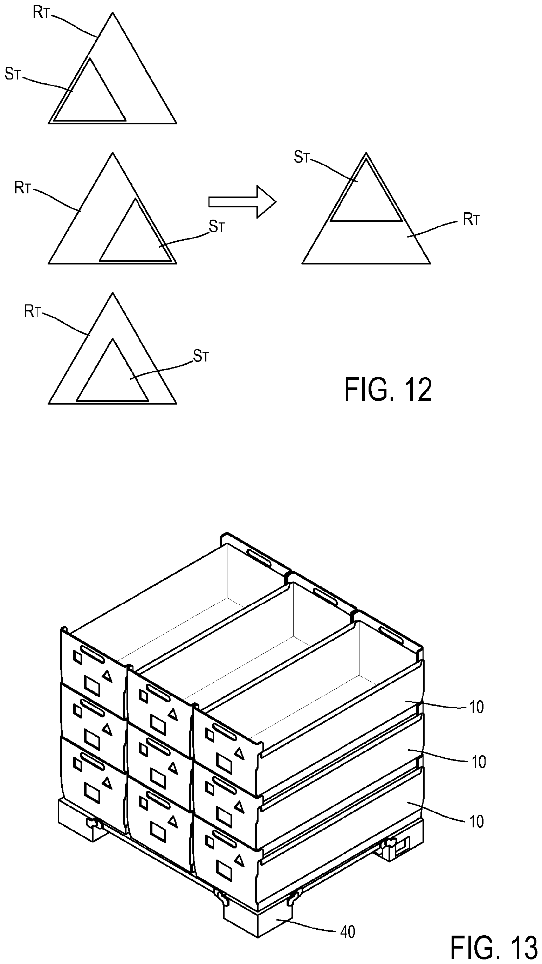

Referring once again to Figures 2 and 3 and also to Figures 4 to 7, each container 10 includes a support 12 that extends along the lower edge 10ab of each long side 10a and at the base of the bottom 10c. The support 12 may be integral with the container 10 or it may be provided as a separate element that can be added to the container. Each support 12 includes one or more legs 14 that render the container 10 stackable on a pallet (see Figures 13 and 15 to 18) and/or on itself (see Figures 4 to 7 and Figure 13). The legs 14 are offset by a predetermined angle Θ from an edge 12a on the bottom of one side 12b of the support 12 to create a shoulder 16 with a predetermined radius 16a. In one embodiment, each leg 14 makes an angle of around 3° with the corresponding edge, in order to correctly position the container with respect to a corresponding pallet (as described hereinbelow). The shoulder 16 engages the upper edge 10aa of a long side 10a of a container 10 below, and allows several containers 10 to be stacked (for example, as shown in Figures 4 to 7 and in Figure 13). In the embodiment shown, two legs 14 extend at the bottom of the shoulder 16, but it must be understood that the legs may be replaced by one or more legs or by one or more equivalent elements.

Referring once again to Figure 2 and also to Figures 4 to 7, a ledge 18 with a predetermined radius 18a extends along the upper edge 10ba of each short side 10b. This ledge 18 engages the lower edge 10bb of a short side 10b of another container 10, and allows several containers 10 to be stacked (for example, as shown in Figures 4 to 7 and in Figure 13). It must be appreciated that a corresponding structure, or an equivalent structure (such as one or more tabs), may be used in place of the ledge 18. The ledge 18, or a corresponding structure, may be used in combination with the legs 14 to align and correctly position several stacked containers.

Correct mutual positioning of the stacked containers is achieved via female faces and male faces at different angles. With reference to Figures 4 and 5, a pair of containers 10 are stacked in such a way that an exterior surface 12a of the support 12 of the container on top is adjacent to the interior surface 10a' of the long side 10a of the container underneath. The ledge 18 engages the shoulder 16 adjacent its radius 16a. In a transverse direction, it can be seen that an approach clearance JA_{CT} is defined between one end 12x of the support 12 of the container on top and one end 10x of the long side 10a of the container underneath. In one embodiment, this approach clearance is approximately 5 mm. This approach clearance allows a good positioning clearance JP_{CT} defined between one part of the support 12, next to the radius 16a, and an adjacent part of the interior surface 10a' of the long side 10a of the container underneath. In one embodiment, this positioning clearance is around 2 mm.

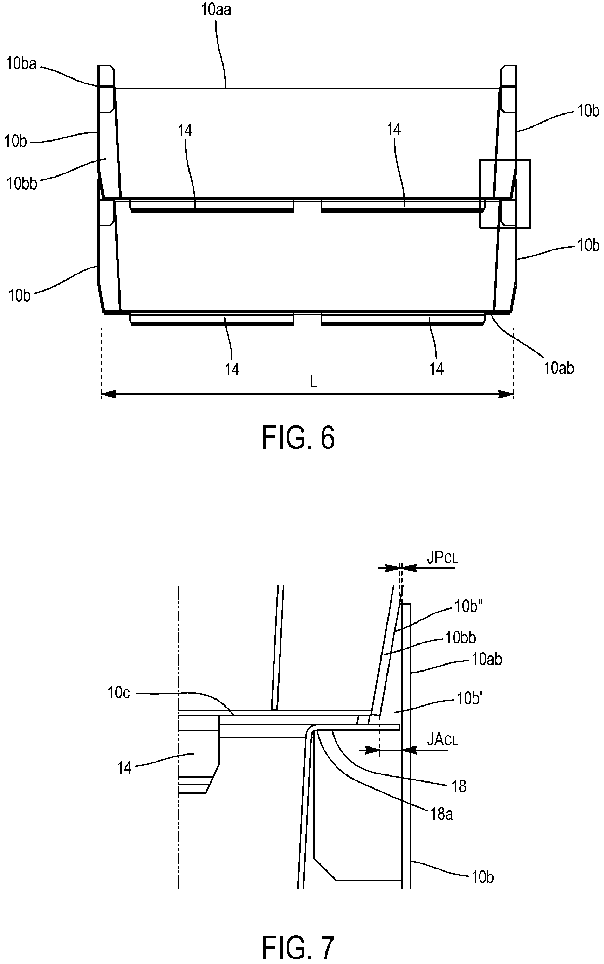

With reference to Figures 6 and 7, the ledge 18 also fits over the shoulder 16. In a longitudinal direction, an approach clearance JA_{CL} is defined between the lower edge 10bb of the short side 10b of the container on top and the interior surface 10b' of the short side 10b of the ledge 18 of the container underneath. In one embodiment, this approach clearance is approximately 10 mm. This approach clearance allows a good positioning clearance JP_{CL} defined between the exterior surface 10b" of the short side 10b of the container 10 on top and the interior surface 10b' of the short side 10b of the container underneath. In one embodiment, this positioning clearance is around 1 mm.

In each direction (transverse and longitudinal), the ledges 18 facilitate the guidance of the container while it is being stacked with other similar containers. It is for that reason that the approach clearance and the positioning clearance in the two directions are always maintained, thus ensuring that the stacked containers are aligned (for example, as shown in Figure 13).

In one embodiment of the container 10, each short side 10b also includes an optional handle 10P that extends from the upper edge 10ba and on the outside of the ledge 18. The handle 10P allows the container 10 to be handled either automatically or manually.

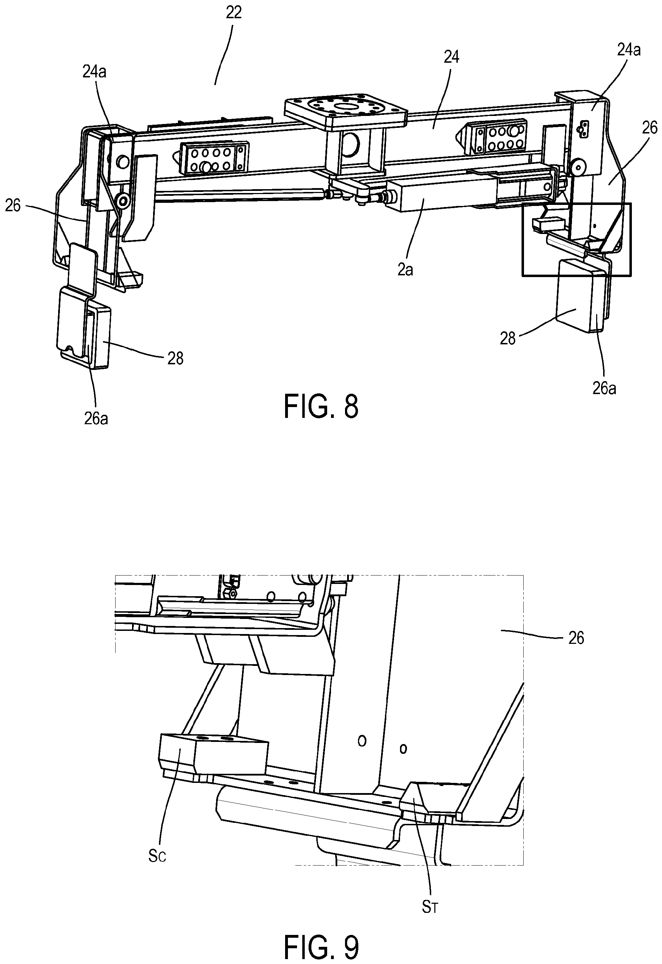

Referring once again to Figures 2 and 3 and also to Figures 8 to 12, the exterior surface 10b" of each short side 10b of the container 10 has an identification and gripping means that works in concert with an automated handling device. In this embodiment, the automated handling device is a gripper 22 that may be incorporated into a robot or some other device as known by those skilled in the art. The gripper 22 includes a longitudinal arm 24 having a predetermined length defined by two opposite ends 24a. In some embodiments, this length is adjustable. A vertical arm 26 extends from each end and includes an RFID reader 28 that is incorporated into an element 26a that extends at the bottom of the vertical arm. The element 26a extends from a free end at the bottom of the vertical arm 26 at which end there are positioned a square projection S_{C} and a triangular projection S_{T}. In some embodiments, the vertical arms 26 may be adjustable (for example using an electric actuating cylinder 29 as shown in Figure 8).

The identification and gripping means includes an RFID tag 31, positioned on the exterior surface 10b" of the short side 10b of the container 10. The RFID tag 31 allows the corresponding RFID reader 28 positioned on the gripper 22 to identify the container 10. The identification and gripping means also includes a gripping system having a system of corresponding recesses and projections so that the identification and gripping system allows the container 10 to be suitably positioned by aligning a projection in a corresponding recess. The recesses include a square recess R_{C} and a triangular recess R_{T} built into the exterior surface of each short side 10b of the container 10. The projections include the square projection S_{C} and the triangular projection S_{T} on the gripper 22 (see Figure 9). It is understood that the geometry of the recesses and of the projections is not restricted to squares and triangles.

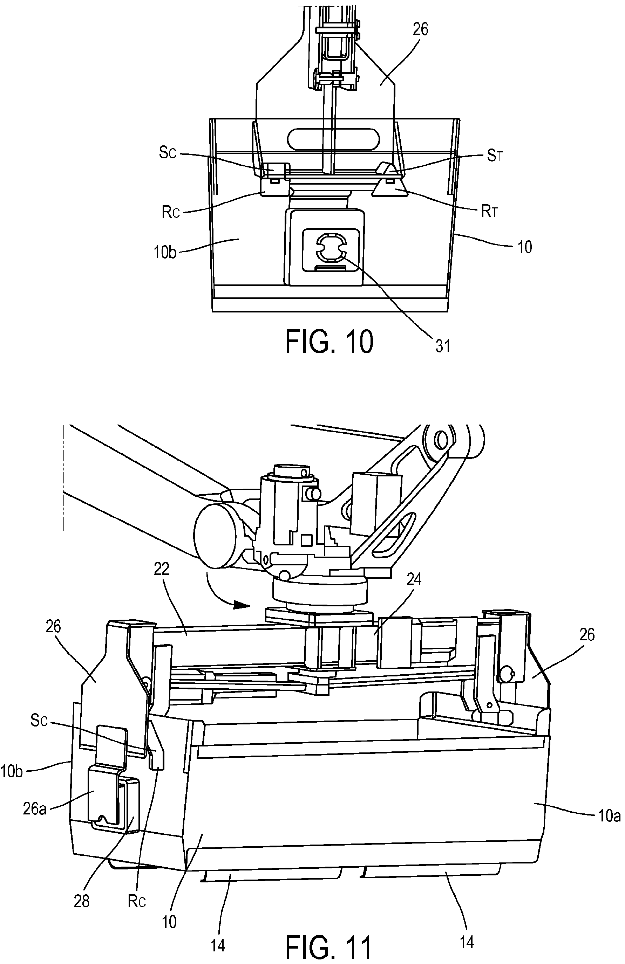

With reference to Figures 10 and 11, during a transfer sequence, each RFID reader 28 is aligned with a corresponding RFID tag 31 (see Figure 10) so that the RFID reader can recognize a container 10 that is intended for transfer (for example, by identifying a container filled with products recovered for reuse that have specific properties so that it can be transferred onto a pallet). When the RFID reader 28 of the gripper 22 detects the RFID tag 31 of the container 10, the RFID reader 28 indicates the presence of the container and also the correct position thereof in the gripper. By recognizing the container, the RFID reader 28 identifies the correct container in order to ensure that the correct products recovered for reuse are properly transferred. The transfer sequence may be carried out by a known robot 37 that may render the container mobile and rotatable (for example in the anticlockwise direction as indicated by the arrow in Figure 11).

When the RFID reader 28 is aligned with the corresponding RFID tag 31, the projections Sc, S_{T} of the gripper 22 are also aligned with the respective recesses R_{C}, R_{T} of the container 10. As a result, the gripper 22 can handle and transfer the container 10 (for example, during a process of transferring the container). With reference to Figure 12, this figure depicts a schematic view of the triangular projection S_{T} of the gripper 22 in the working position inside the triangular recess R_{T} of the container 10 (performed, for example, during a transfer of the container 10 by the gripper 22). If the triangular projection S_{T} is not aligned with the triangular recess R_{T}, the triangular projection is still guided towards a position of alignment with the triangular recess. As a result, whatever the status (full or empty) of the container, and even if the container is not perfectly aligned (for example, on a pallet), the system of recesses and of projections allows the container 10 to be suitably positioned by the aligning of the projection in the corresponding recess.

The configuration of the container 10 and the corresponding configuration of the gripper 22 also ensure suitable positioning of the container on a pallet. In the case of pallets completely full of (full or empty) containers (or "complete pallets"), and also in the case of pallets that are not completely full of containers (or "incomplete pallets"), it is necessary to ensure suitable positioning of each container on the relevant pallet. The legs 14 of the container 10 make the container stackable on a pallet or on itself, and the identification and gripping means of the container 10 ensures suitable positioning (for example, ensuring vertical and horizontal alignment of containers with respect to one another and of containers with respect to the pallets).

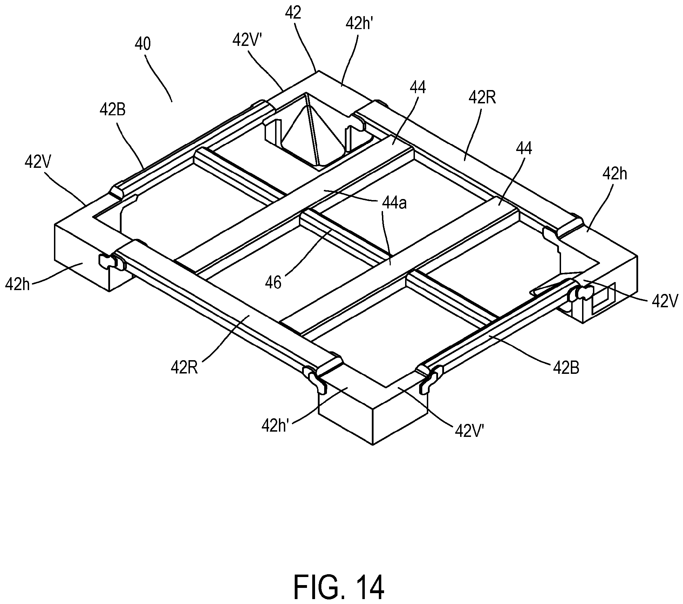

Referring also to Figure 13, it is planned for the described containers (full or empty) to be aligned and stacked on a pallet (for example, during a process of automatically making up pallets having containers filled with products recovered for reuse, identified according to a current production plan). Referring also to Figure 14, one example of a pallet 40 is given, upon which pallet the containers 10 (full or empty) are aligned and stacked. It is understood that the pallet used with the containers may be selected from any equivalent and/or known pallet embodiment.

The pallet 40 includes a frame 42 that is designed to carry containers 10. The frame 42 has a generally rectangular geometry. There are two opposite horizontal sides 42h separated by a predetermined distance that corresponds to the length L of at least one container 10 (see Figure 6). There are two opposite vertical sides 42V separated by a predetermined distance that corresponds to the width *l* of the container 10 (see Figure 4). The horizontal sides 42h and the vertical sides 42V are integrated so that the frame 42 is provided as one-piece. In the embodiment of Figure 14, the pallet 40 is capable of storing and transporting up to nine containers 10(full or empty)(see Figure 13).

Referring again to Figure 14, one or more crosspieces 44 are arranged between the horizontal sides 42h and are spaced apart from one another and with respect to each vertical side 42V by a predetermined distance that corresponds to the width I of the container 10. Each crosspiece 44 includes an upper surface 44a that allows the centring of the lower edge 10ab of the long side 10a of the container 10. To stiffen the pallet 40, an additional crosspiece 46 is provided, generally mid-way along the width of the crosspieces 44. The additional crosspiece 46 is arranged parallel to the horizontal sides 42h, and this crosspiece is arranged at right angles to the vertical sides 42V. The vertical sides 42V and the additional crosspiece 46 are arranged in the one same plane so as to allow a known device (for example a commercially available forklift) to engage on the pallet 40.

Each horizontal side 42h includes an upper surface 42h' from which a ridge 42R of predetermined height extends. Each ridge ends in a bearing surface 42R'. Each vertical side 42V also includes an upper surface 42V' from which a berm 42B (or equivalent) of predetermined height extends. Each berm ends in a bearing surface 42B'. The height of each ridge 42R is equal to the height of each berm 42B so that the bearing surfaces 42R', 42B' align the containers 10 on the pallet. The ridge 42R of each horizontal side 42h allows the engagement of the support 12 and, more particularly, of the shoulder 16 of the container 10. The berm 42B of each vertical side 42V allows the engagement of the exterior surface 10c" of the bottom 10c next to the lower edge 10bb of the short side 10b of a container 10. In this embodiment, the legs 14 of each container 10 engage along the ridges 42R and the crosspieces 44.

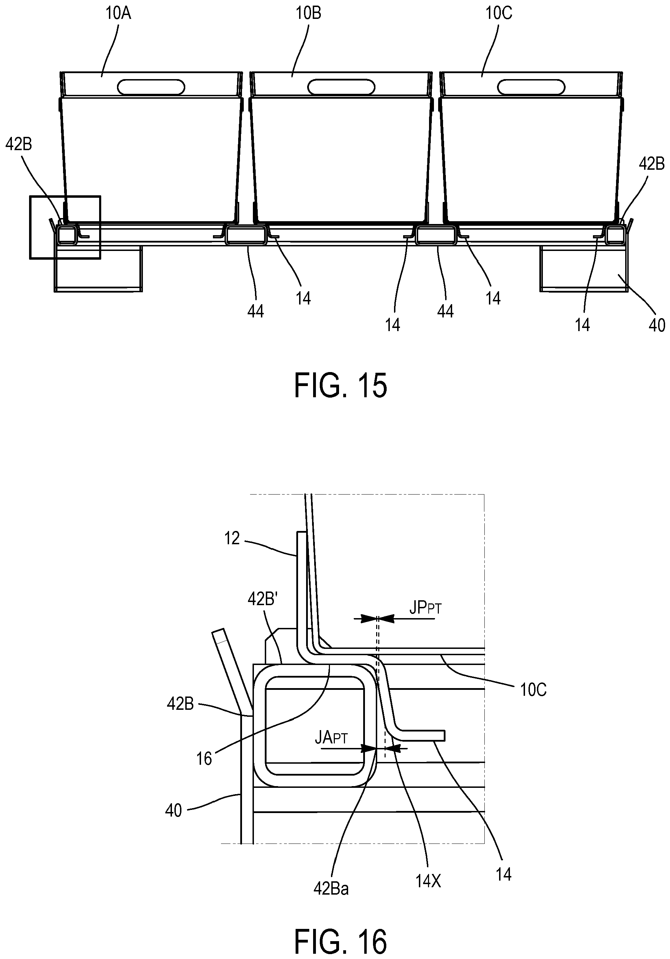

With reference to Figures 15 to 18, correct positioning between the pallet 40 and stacked containers 10A, 10B, 10C is achieved by means of male faces at different angles on the two axes. The containers are stacked in such a way that the berm 42B of each vertical side 42V, and particularly the bearing surface 42B' of each berm, engages a shoulder 16 of a container 10A, 10C. Each crosspiece 44 engages the shoulder 16 of a corresponding container 10A, 10C that has not yet been engaged by a berm. Each crosspiece 44 also engages the two shoulders 16 of the container 10B. In a transverse direction (see Figures 15 and 16), it can be seen that an approach clearance JA_{PT} is defined between one end 14x of the leg 14 and an interior edge 42Ba of the berm 42B. In one embodiment, this approach clearance is approximately 4 mm. This approach clearance allows a good positioning clearance JP_{PT} defined between the support 12 of a container 10, 10C and the pallet 40. In one embodiment, this positioning clearance is around 1 mm.

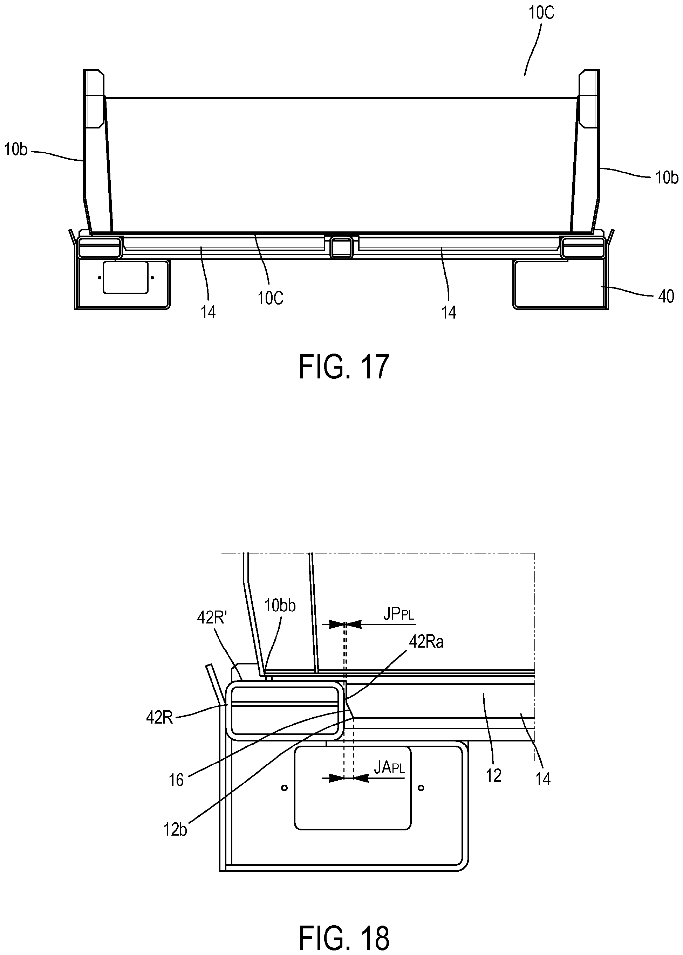

In a longitudinal direction (see Figures 17 and 18), an approach clearance JA_{PL} is defined between an interior edge 42Ra of the ridge 42R and the lower edge 10bb of the short side 10b of each container. In one embodiment, this approach clearance is approximately 8 mm. This approach clearance allows a good positioning clearance JP_{PL} defined between the interior edge 42Ra of the ridge 42R and the shoulder 16 of each container. In one embodiment, this positioning clearance is approximately 1 mm. In each direction (transverse and longitudinal), the ridges 42R and the berms 42B facilitate the guidance of the container 10 while it is being stacked with other containers. It is for that reason that the approach clearance and the positioning clearance in the two directions are always maintained, thus ensuring that the stacked containers are aligned with respect to the pallet.

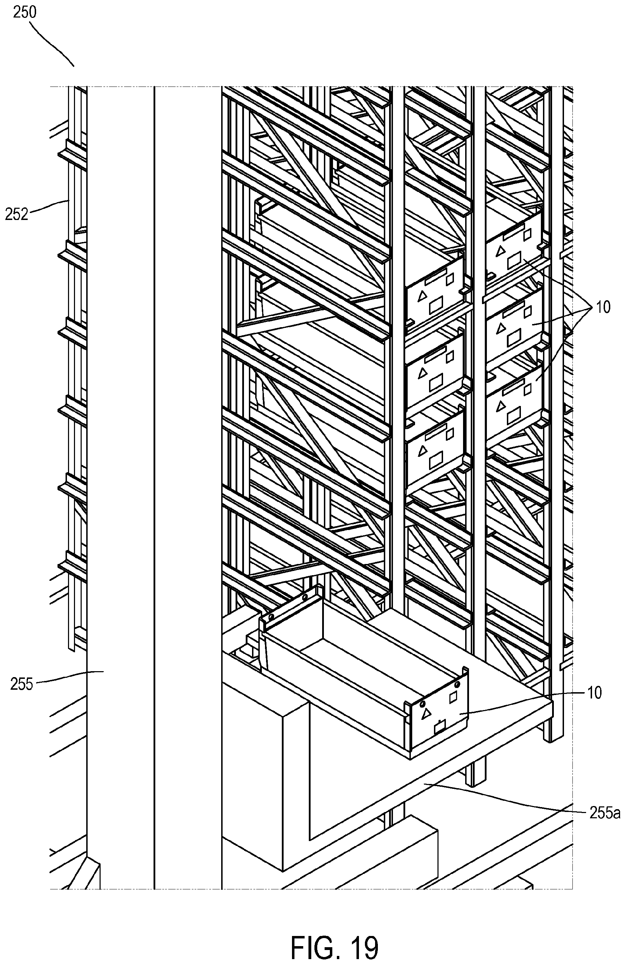

Referring to Figure 19, the recovered products are stored in a containerstorage system (or "container system") 250 in which the unused complexed products originating from at least one manufacturing system are stored in corresponding containers 10. These products have been deemed usable during a tyre manufacturing cycle. Each nature of complexed product has specific properties that can be controlled in order to obtain the products recovered for reuse. The products recovered for reuse arrive at the management system 200 from the system for the storage of products recovered for reuse having already been designated, according to their nature, for re-incorporation into a rubber mixture. It is understood that the container system 250 may accommodate complexed products coming from one, two or several systems and/or machines from which at least a portion of what is produced cannot be exploited directly. The system can record the arrival time (the day, the hour, etc.) of each container 10 in order to permit the management of the duration during which each container is stored in the container system 250.

In one embodiment, the container system 250 may include a storage means that is chosen from automatic means (for example automatic systems and their equivalents or known manual means). As described, the invention refers to a storage means 252 that is an automated storage system (for example an "automatic storage and retrieval" system or "ASRS"). During storage in the container system 250, the complexed products are deemed usable (or "recovered for reuse") for at least one tyre manufacturing campaign. At the moment the complexed products arrive in the storage means, the system 100 render these recovered products available to satisfy a production plan. What is meant in the invention by "campaign" is the duration of operation of an internal mixer, or of a mixing plant, using the same recipe.

The containers 10 full of complexed products are identified and stored in the storage means 252. At the moment the complexed products arrive in the storage means, the system 100 render these recovered products available to satisfy a production plan.

The storage means 252 may include a robot (or equivalent device) capable of selectively placing and removing at least one container 10 relative to the container system 250. The selective placement and removal are performed on a prediction of products recovered for reuse that is intended for a generated production plan containing one or more given campaigns. The robot, which is selected from among the robots commercially available, is depicted as being a stacking device 255 with a shuttle 255a, that operates on rails inside the storage means 252. Of course, the stacking device 255 may be replaced with an equivalent device known to those skilled in the art. The stacking device 255 positions and retrieves the containers according to at least one production plan generated to satisfy an ongoing production plan and forthcoming production plans.

The containers 10 and the pallets 40 are useful in several systems, including systems for mixing rubber. An example of a system in which the containers and the pallets could be used is a management system as disclosed by co-owned application 18/50060 filed 5 January 2018.

For all embodiments, a system can be put in place to ensure the repeatability of the filling and refilling of each container and the correct stacking of each pallet. Verification can be carried out by a known means, including a viewing system that may be manual or automated (for example, with one or more cameras in communication with the PLC). The PLC is configured to control the natures of the stored recovered products against the chosen rubber mixture recipe, in terms of weight required and in the prescribed tolerance. The conformity of the properties of the mixture during the course of each campaign is thus respected.

The terms "at least one" and "one or more" are used interchangeably. The ranges given as lying "between a and b" encompass the values of "a" and "b".

Although particular embodiments of the invention have been illustrated and described, it will be appreciated that various changes, additions and modifications can be made without departing from the scope of the present invention, which is defined in the appended claims.

## Claims

1. A system for processing products recovered for reuse from at least one complexed product manufacturing system of a tire production installation that produces complexed products made up of at least two rubber mixtures having different properties, the processing system comprising:
containers (10) filled with corresponding products recovered for reuse, each container for containing only one single type of recovered product at a any one time,
wherein each container (10) comprises:
a pair of opposite long sides (10a), each long side with an interior surface (10a') and an exterior surface (10a") that coincide with an upper edge (10aa) and a lower edge (10ab) of the long side;
a pair of opposite short sides (10b), each short side with an interior surface (10b') and an exterior surface (10b") that coincide with an upper edge (10ba) and a lower edge (10bb) of the short side; and
a bottom (10c) assembled along the lower edges (10ab, 10bb) of the long and short sides (10a, 10b), with an interior surface (10c'), an exterior surface (10c"), and several orifices (10d) that are aligned along the length of the bottom (10c) of the container; such that the interior surfaces (10a') of the long sides (10a), the interior surfaces (10b') of the short sides (10b) and the interior surface (10c') of the bottom (10c) together form a volume to receive a specific product recovered for reuse; and wherein each container (10) further comprises:
supports (12) that extend along the lower edge (10ab) of each long side (10a) and along a base of the bottom (10c), each support (12) having one or more legs (14) that comprise a side (12b) and an edge (12a) to create a shoulder (16) with a predetermined radius (16a), wherein the edge (12a) is offset from the lower edge (10ab) of each long side (10a), by a predetermined angle Θ between the long side (10a) and the side (12b) of the support (12), and
a ledge (18) with a predetermined radius (18a) that extends along the upper edge (10ba) of each short side (10b);
such that the shoulder (16) and the ledge (18) allow several containers (10) to be stacked;
and one or more pallets (40) upon which the containers (10) are aligned and stacked, each pallet (40) having a generally rectangular geometry, wherein each pallet (40) comprises a frame (42) of a generally rectangular geometry comprising:
two opposite horizontal sides (42h) separated by a predetermined distance that corresponds to a sum of widths (*l*) of the container (10), and each horizontal side with an upper surface (42h') from which a ridge (42R) of predetermined height extends, and each ridge ends in a bearing surface (42R'); and
two opposite vertical sides (42V) separated by a predetermined distance that corresponds to the length (L) of the container (10), and each vertical side with an upper surface (42V') from which a berm (42B) of predetermined height extends, and each berm ends in a bearing surface (42B');
such that the height of each ridge (42R) is equal to the height of each berm (42B);
**characterized in that** each pallet (40) further comprises:
at least one crosspiece (44) arranged between the horizontal sides (42h) and spaced apart from one another and with respect to each vertical side (42V) by a predetermined distance that corresponds to the width (/) of the container (10), each crosspiece (44) with an upper surface (44a); and
an additional crosspiece (46) being arranged parallel to the horizontal sides (42h) and arranged at right angles with respect to the vertical sides (42V), and the vertical sides and the additional crosspiece being arranged in a same plane; such that the bearing surface (42B') of each berm (42B) and the upper surface (44a) of each crosspiece (44) engages a corresponding shoulder (16).

2. The system of claim 1, comprising two or more stacked containers (10) such that:
an outer surface of the support (12) of a container above is adjacent to the inner surface (10a ') of the longer side (10a) of a container below; and
the ledge (18) engages the shoulder (16) beside the radius (16a).

3. The system of claim 2, wherein:
in a transverse direction, an approach clearance (JA_{CT}) is defined between an end (12x) of the support (12) of a container above and an end (10x) of the long side (10a) of a container below, and a positioning clearance (JP_{CT}) is defined between a portion of the support (12), adjacent to the radius 16a, of the container above, and an adjacent portion of the inner surface (10a') of the long side (10a) of the container below; and
in a longitudinal direction, an approach clearance (JA_{CL}) is defined between the lower edge (10bb) of the short side (10b) of the container above and the inner surface (10b') of the short side (10b) of the container below, and a positioning clearance (JP_{CL}) is defined between the outer surface (10b") of the short side (10b) of the container above, and the inner surface (10b') of the short side (10b) of the container below.

4. The system of claim 2 or claim 3, wherein multiple containers are stacked such that:
the bearing surface (42B') of each berm (42B) engages a shoulder (16) of a container (10, 10C);
each crosspiece (44) engages another shoulder (16) of a corresponding container (10A, 10C) that is not yet engaged by a berm; and
each crosspiece (44) engages the two shoulders (16) of a container (10B) that is not yet engaged.

5. The system of claim 4, wherein:
in a transverse direction, an approach clearance (JA_{PT}) is defined between one end (14x) of the foot (14) and an inner edge (42Ba) of the berm (42B), and a positioning clearance (JP_{PT}) is defined between the support (12) of a container (10, 10C) engaged by a berm (42B) and the pallet (40); and
in a longitudinal direction, an approach clearance (JA_{PL}) is defined between an inner edge (42Ra) of the ridge (42R) and the lower edge (10bb) of the short side (10b) of each container.

6. The system of any of claims 1 to 5, further comprising an identification and gripping system having an identification and gripping means that works with an automated handling device.

7. The system of claim 6, wherein the automated handling device comprises a gripper (22) including:
a longitudinal arm (24) having a predetermined length defined by two opposite ends (24a);
a vertical arm (26) that extends from each end and comprises an automated reader; and
an element (26a) that extends from a free end at the bottom of the vertical arm (26) and into which the automated reader is incorporated.

8. The system of claim 7, wherein the identification and gripping means of the identification and gripping system comprises:
a tag incorporated into the exterior surface (10b") of each short side (10b) of the container (10) that allows the container to be identified by the corresponding reader positioned on the gripper (22); and
a system of corresponding recesses (R_{C}, R_{T}) and projections (S_{C}, S_{T}), with the recesses incorporated into the exterior surface (10b") of each short side (10b) of the container and the projections being incorporated into the element (26a) of the gripper (22);
such that the identification and gripping system allows the container (10) to be suitably positioned by aligning a projection in a corresponding recess.

9. The system of claim 7 or claim 8, wherein the reader comprises an RFID reader (28) and the tag comprises an RFID tag (31).

10. The system of any preceding claim, further comprising a storage system (250) for the storage of products recovered for reuse, in which system containers (10) full of products recovered for reuse are identified and stored according to their natures, the properties of which are known.

11. The system of claim 10, wherein the system (250) for the storage of products recovered for reuse comprises an automated storage system.

12. The system of any preceding claim, further comprising an identification means for harmonizing the identification of a pallet with the identification of the containers (10) stored on the pallet.

## Patentansprüche

1. System zur Verarbeitung von Produkten, die von mindestens einem Herstellungssystem von in Komplexform vorliegenden Produkten einer Reifenherstellungsanlage zur Wiederverwendung wiedergewonnen worden sind, die in Komplexform vorliegende Produkte herstellt, die aus mindestens zwei Kautschukmischungen mit unterschiedlichen Eigenschaften hergestellt sind, wobei das Verarbeitungssystem Folgendes umfasst:
Behälter (10), die mit entsprechenden zur Wiederverwendung wiedergewonnenen Produkten gefüllt sind, wobei jeder Behälter zu einem beliebigen Zeitpunkt nur eine einzige Art von wiedergewonnenem Produkt enthält,
wobei jeder Behälter (10) Folgendes umfasst:
ein Paar gegenüberliegender langer Seiten (10a), wobei jede lange Seite eine Innenfläche (10a') und eine Außenfläche (10a") aufweist, die mit einem oberen Rand (10aa) und einem unteren Rand (10ab) der langen Seite zusammenfallen,
ein Paar gegenüberliegender kurzer Seiten (10b), wobei jede kurze Seite eine Innenfläche (10b') und eine Außenfläche (10b") aufweist, die mit einem oberen Rand (10ba) und einem unteren Rand (10bb) der kurzen Seite zusammenfallen, und
einen entlang der unteren Ränder (10ab, 10bb) der langen und der kurzen Seiten (10a, 10b) montierten Boden (10c) mit einer Innenfläche (10c'), einer Außenfläche (10c") und mehreren Öffnungen (10d), die entlang der Länge des Bodens (10c) des Behälters fluchten, so dass die Innenflächen (10a') der langen Seiten (10a), die Innenflächen (10b') der kurzen Seiten (10b) und die Innenfläche (10c') des Bodens (10c) zusammen ein Volumen zur Aufnahme eines spezifischen zur Wiederverwendung wiedergewonnenen Produkts bilden,
und wobei jeder Behälter (10) ferner Folgendes umfasst:
Stützen (12), die sich entlang des unteren Rands (10ab) jeder langen Seite (10a) und entlang einer Basis des Bodens (10c) erstrecken, wobei jede Stütze (12) einen oder mehrere Schenkel (14) hat, die eine Seite (12b) und einen Rand (12a) umfassen, um eine Schulter (16) mit einem vorbestimmten Radius (16a) zu schaffen, wobei der Rand (12a) mit einem vorbestimmten Winkel θ zwischen der langen Seite (10a) und der Seite (12b) der Stütze (12) von dem unteren Rand (10ab) jeder langen Seite (10a) versetzt ist,
einen Absatz (18) mit einem vorbestimmten Radius (18a), der sich entlang des oberen Rands (10ba) jeder kurzen Seite (10b) erstreckt,
so dass dank der Schulter (16) und des Absatzes (18) mehrere Behälter (10) gestapelt werden können,
und eine oder mehrere Paletten (40), auf denen die Behälter (10) fluchten und gestapelt sind, wobei jede Palette (40) eine allgemein rechteckige Geometrie hat, wobei jede Palette (40) einen Rahmen (42) mit einer allgemein rechteckigen Geometrie umfasst, der Folgendes umfasst:
zwei gegenüberliegende horizontale Seiten (42h), die mit einem vorbestimmten Abstand getrennt sind, der einer Summe von Breiten (*l*) des Behälters (10) entspricht, wobei jede horizontale Seite eine obere Fläche (42h') hat, von der sich eine Erhöhung (42R) mit vorbestimmter Höhe erstreckt, und jede Erhöhung in einer Lagerfläche (42R') endet, und
zwei gegenüberliegende vertikale Seiten (42V), die mit einem vorbestimmten Abstand getrennt sind, der der Länge (L) des Behälters (10) entspricht, wobei jede vertikale Seite eine obere Fläche (42V') hat, von der sich eine Berme (42B) mit vorbestimmter Höhe erstreckt, und jede Berme in einer Lagerfläche (42B') endet,
so dass die Höhe jeder Erhöhung (42R) gleich der Höhe jeder Berme (42B) ist,
**dadurch gekennzeichnet, dass** jede Palette (40) ferner Folgendes umfasst:
mindestens ein Querstück (44), das zwischen den horizontalen Seiten (42h) angeordnet ist und voneinander und bezüglich jeder vertikalen Seite (42V) mit einem vorbestimmten Abstand beabstandet ist, der der Breite (1) des Behälters (10) entspricht, wobei jedes Querstück (44) eine obere Fläche (44a) hat, und
ein zusätzliches Querstück (46), das parallel zu den horizontalen Seiten (42h) und im rechten Winkel zu den vertikalen Seiten (42V) angeordnet ist, wobei die vertikalen Seiten und das zusätzliche Querstück in einer selben Ebene angeordnet sind, so dass die Lagerfläche (42B') jeder Berme (42B) und die obere Fläche (44a) jedes Querstücks (44) eine entsprechende Schulter (16) in Eingriff nehmen.

2. System nach Anspruch 1, umfassend zwei oder mehr gestapelte Behälter (10), so dass:
eine Außenfläche der Stütze (12) eines oberen Behälters der Innenfläche (10a') der längeren Seite (10a) eines unteren Behälters benachbart ist und
der Absatz (18) die Schulter (16) neben dem Radius (16a) in Eingriff nimmt.

3. System nach Anspruch 2, wobei:
ein Annäherungsfreiraum (JA_{CT}) in einer Querrichtung zwischen einem Ende (12x) der Stütze (12) eines oberen Behälters und einem Ende (10x) der langen Seite (10a) eines unteren Behälters definiert ist und ein Positionierungsfreiraum (JP_{CT}) zwischen einem Abschnitt der Stütze (12), dem Radius 16a benachbart, des oberen Behälters und einem benachbarten Abschnitt der Innenfläche (10a') der langen Seite (10a) des unteren Behälters definiert ist, und
ein Annäherungsfreiraum (JA_{CL}) in einer Längsrichtung zwischen dem unteren Rand (10bb) der kurzen Seite (10b) des oberen Behälters und der Innenfläche (10b') der kurzen Seite (10b) des unteren Behälters definiert ist und
ein Positionierungsfreiraum (JP_{CL}) zwischen der Außenfläche (10b") der kurzen Seite (10b) des oberen Behälters und der Innenfläche (10b') der kurzen Seite (10b) des unteren Behälters definiert ist.

4. System nach Anspruch 2 oder Anspruch 3, wobei mehrere Behälter aufeinandergestapelt sind, so dass:
die Lagerfläche (42B') jeder Berme (42B) eine Schulter (16) eines Behälters (10, 10C) in Eingriff nimmt,
jedes Querstück (44) eine andere Schulter (16) eines entsprechenden Behälters (10A, 10C) in Eingriff nimmt, die noch nicht von einer Berme in Eingriff genommen worden ist, und
jedes Querstück (44) zwei Schultern (16) eines Behälters (10B) in Eingriff nimmt, der noch nicht in Eingriff genommen worden ist.

5. System nach Anspruch 4, wobei:
ein Annäherungsfreiraum (JA_{PT}) in einer Querrichtung zwischen einem Ende (14x) des Fußes (14) und einem inneren Rand (42Ba) der Berme (42B) definiert ist und ein Positionierungsfreiraum (JP_{PT}) zwischen der Stütze (12) eines Behälters (10, 10C), der von einer Berme (42B) in Eingriff genommen worden ist, und der Palette (40) definiert ist, und
ein Annäherungsfreiraum (JA_{PL}) in einer Längsrichtung zwischen einem inneren Rand (42Ra) der Erhöhung (42R) und dem unteren Rand (10bb) der kurzen Seite (10b) jedes Behälters definiert ist.

6. System nach einem der Ansprüche 1 bis 5, ferner umfassend ein Identifikations- und Greifsystem mit einem Identifikations- und Greifmittel, das mit einer automatischen Handhabungsvorrichtung arbeitet.

7. System nach Anspruch 6, wobei die automatische Handhabungsvorrichtung einen Greifer (22) umfasst, der Folgendes aufweist:
einen Längsarm (24) mit einer vorbestimmten Länge, die durch zwei gegenüberliegende Enden (24a) definiert ist,
einen vertikalen Arm (26), der sich von jedem Ende erstreckt und ein automatisches Lesegerät umfasst, und
ein Element (26a), das sich von einem freien Ende unten an dem vertikalen Arm (26) erstreckt und in das das automatische Lesegerät eingegliedert ist.

8. System nach Anspruch 7, wobei das Identifikations- und Greifmittel des Identifikations- und Greifsystems Folgendes umfasst:
ein Tag, das in die Außenfläche (10b") jeder kurzen Seite (10b) des Behälters (10) eingegliedert ist und gestattet, dass der Behälter von dem entsprechenden an dem Greifer (22) positionierten Lesegerät identifiziert wird, und
ein System aus entsprechenden Aussparungen (R_{C}, R_{T}) und Vorsprüngen (S_{C}, S_{T}), wobei die Aussparungen in der Außenfläche (10b'') jeder kurzen Seite (10b) des Behälters eingegliedert sind und die Vorsprünge in dem Element (26a) des Greifers (22) eingegliedert sind,
so dass das Identifikations- und Greifsystem gestattet, dass der Behälter (10) angemessen positioniert wird, indem ein Vorsprung in einer entsprechenden Aussparung ausgerichtet wird.

9. System nach Anspruch 7 oder Anspruch 8, wobei das Lesegerät ein RFID-Lesegerät (28) umfasst und das Tag ein RFID-Tag (31) umfasst.

10. System nach einem der vorhergehenden Ansprüche, ferner umfassend ein Lagersystem (250) zum Lagern von zur Wiederverwendung wiedergewonnenen Produkten, in dem Behälter (10) voll von zur Wiederverwendung wiedergewonnenen Produkten identifiziert und gemäß ihrer Art gelagert werden, wobei ihre Eigenschaften bekannt sind.

11. System nach Anspruch 10, wobei das System (250) zum Lagern von zur Wiederverwendung wiedergewonnenen Produkten ein automatisches Lagersystem umfasst.

12. System nach einem der vorhergehenden Ansprüche, ferner umfassend ein Identifikationsmittel zum Abstimmen der Identifikation einer Palette mit der Identifikation der auf der Palette gelagerten Behälter (10).

## Revendications

1. Système de conditionnement de produits valorisés, en provenance d'au moins un système de fabrication de produits complexés d'une installation de fabrication des pneumatiques qui produit des produits complexés comprenant au moins deux mélanges de gomme ayant des propriétés différentes, le système de conditionnement comprenant :
des contenants (10) remplis des produits valorisés correspondants, chaque contenant ne contenant qu'un seul type de produit valorisé à la fois ;
dans lequel chaque contenant (10) comprend :
une paire de grands côtés (10a) opposés, chaque grand côté ayant une surface intérieure (10a') et une surface extérieure (10a") qui coïncident avec un bord supérieur (10aa) et un bord inférieur (10ab) du grand côté ;
une paire de petits côtés (10b) opposés, chaque petit côté ayant une surface intérieure (10b') et une surface extérieure (10b") qui coïncident avec un bord supérieur (10ba) et un bord inférieur (10bb) du petit côté ; et
un fond (10c) assemblé le long des bords inférieurs (10ab), (10bb) des grands et petits côtés (10a, 10b), avec une surface intérieure (10c'), une surface extérieure (10c") et plusieurs orifices (10d) qui sont alignés le long de la longueur du fond du contenant;
de sorte que les surfaces intérieures (10a') des grands côtés (10a), les surfaces intérieures (10b') des petits côtés (10b) et la surface intérieure (10c') du fond (10c) forment ensemble un volume pour recevoir un produit valorisé spécifique,
dans lequel chaque contenant (10) comprend en outre :
un support (12) qui s'étend le long du bord inférieur (10ab) de chaque grand côté (10a) et en bas du fond (10c), chaque support ayant un ou plusieurs pieds (14) qui comprennent un côté (12b) et un bord (12a) pour créer un épaulement (16) ayant un rayon (16a) prédéterminé, dans lequel le bord (12a) est décalé par rapport au bord inférieur (10ab) de chacun des grands côtés (10a) d'un angle Θ prédéterminé entre le grand côté (10a) et le côté (12b) du support (12) ;
et un rebord (18) avec un rayon (18a) prédéterminé qui s'étend le long du bord supérieur (10ba) de chaque petit côté (10b),
de telle manière que l'épaulement (16) et le rebord (18) permettent l'empilage de plusieurs contenants (10),
et une ou plusieurs palettes (40) sur laquelle le contenant (10) sont alignés et empilés, chaque palette (40) ayant généralement une géométrie rectangulaire dans lequel chaque palette (40) comprend un cadre (42) généralement de géométrie rectangulaire comprenant :
deux côtés horizontaux (42h) opposés et séparés par une distance prédéterminée qui correspond à la somme des largeurs (*l*) du contenant (10), et chaque côté horizontal ayant une surface supérieure (42h') de laquelle une réglette (42R) ayant une hauteur prédéterminée s'étend, et chaque réglette se terminant par une surface d'appui (42R'); et
deux côtés verticaux (42v) opposés et séparés par une distance prédéterminée qui correspond à la longueur (L) du contenant (10), et chaque côté vertical ayant une surface supérieure (42v') de laquelle une baguette (42B) ayant une hauteur prédéterminée s'étend, et chaque baguette se terminant par une surface d'appui (42B') ;
de sorte que la hauteur de chaque réglette (42R) est égale à la hauteur de chaque baguette (42B),
**caractérisé en ce que** chaque palette (40) comprend
au moins une traverse (44) disposée entre les côtés horizontaux (42h), et espacées l'une par rapport à l'autre et par rapport à chaque côté vertical (42v) par une distance prédéterminée qui correspond à la largeur (*l*) du contenant (10), chaque traverse (44) ayant une surface supérieure (44a) ; et
une traverse complémentaire (46) disposée parallèlement par rapport aux côtés horizontaux (42h) et disposée perpendiculairement par rapport aux côtés verticaux (42v), et les côtés verticaux et la traverse complémentaire étant disposés le long d'un même plan,
de sorte que la surface d'appui (42B') de chaque baguette (42B) et la surface supérieure (44a) de chaque traverse (44) s'engage sur un épaulement (16) correspondant.

2. Système de la revendication 1, comprenant deux ou plusieurs contenants (10) empilés de sorte que :
une surface extérieure (12a) d'un contenant au-dessus soit adjacente à la surface intérieure (10a') du grand côté (10a) d'un contenant en dessous ; et
le rebord (18) s'engage sur l'épaulement (16) à côté du rayon (16a).

3. Système de la revendication 2, dans lequel :
dans un sens transversal, un jeu d'approche (JA_{CT}) est défini entre une extrémité (12x) du support (12) d'un contenant au-dessus et une extrémité (10x) du grand côté (10a) d'un contenant en dessous, et un jeu de positionnement (JP_{CT}) est défini entre une partie du support (12), à côté du rayon 16a, du contenant au-dessus, et une partie adjacente de la surface intérieure (10a') du grand côté (10a) du contenant en dessous ; et
dans un sens longitudinal, un jeu d'approche (JA_{CL}) est défini entre le bord inférieur (10bb) du petit côté (10b) du contenant au-dessus et la surface intérieure (10b') du petit côté (10b) du contenant en dessous, et un jeu de positionnement (JP_{CL}) est défini entre la surface extérieur (10b") du petit côté (10b) du contenant au-dessus, et la surface intérieure (10b') du petit côté (10b) du contenant en dessous.

4. Système de la revendication 2 ou la revendication 3, dans lequel plusieurs contenants sont empilés pour que :
la surface d'appui (42B') de chaque baguette (42B) s'engage sur un épaulement (16) d'un contenant (10, 10C) ;
chaque traverse (44) s'engage sur un autre épaulement (16) d'un contenant (10A, 10C) correspondant qui n'est pas encore engagé par une baguette ; et
chaque traverse (44) s'engage sur les deux épaulements (16) d'un contenant (10B) qui n'est pas encore engagé.

5. Système de la revendication 4, dans lequel :
dans un sens transversal, un jeu d'approche (JA_{PT}) est défini entre une extrémité (14x) du pied (14) et un bord intérieur (42Ba) de la baguette (42B), et un jeu de positionnement (JP_{PT}) est défini entre le support (12) d'un contenant (10, 10C) engagé par une baguette (42B) et la palette (40) ; et
dans un sens longitudinal, un jeu d'approche (JA_{PL}) est défini entre un bord intérieur (42Ra) de la réglette (42R) et le bord inférieur (10bb) du petit côté (10b) de chaque contenant.

6. Système de l'une quelconque des revendications 1 à 5, comprenant en outre un système d'identification et de préhension avec un moyen d'identification et de préhension qui travaille avec un dispositif de manutention automatisé.

7. Système de la revendication 6, dans lequel le dispositif de manutention automatisé comprend un préhenseur (22) comportant :
un bras longitudinal (24) ayant une longueur prédéterminée définie par deux extrémités (24a) opposées ;
un bras vertical (26) qui s'étend de chaque extrémité et comporte un lecteur automatisé; et
un élément (26a) qui s'étend d'une extrémité libre en bas du bras vertical (26) et dans lequel le lecteur automatisé s'incorpore.

8. Système de la revendication 7, dans lequel le moyen d'identification et de préhension du système d'identification et de préhension comprend :
un tag intégré à la surface extérieure (10b") de chaque petit côté (10b) du contenant (10) qui permet l'identification du contenant par le lecteur correspondant positionné sur le préhenseur (22) ; et
un système de renfoncements (R_{C}, R_{T}) et de saillies (S_{C}, S_{T}) correspondants, les renfoncements étant intégrés à la surface extérieure (10b") de chaque petit côté (10b) du contenant et les saillies s'incorporant sur l'élément (26a) du préhenseur (22) ;
de sorte que le système d'identification et de préhension permet un bon positionnement du contenant (10) grâce au recentrage d'une saillie dans un renfoncement correspondant.

9. Système de la revendication 7 ou de la revendication 8, dans lequel le lecteur comprend un lecteur RFID (28) et le tag comprend un tag RFID (31).

10. Système de l'une quelconque des revendications précédentes, comprenant en outre un système de stockage (250) pour le stockage de produits valorisés, dans lequel des contenants (10) remplis de produits valorisés sont identifiés et stockés en fonction de leurs natures et dont les propriétés sont connues.

11. Système de la revendication 10, dans lequel le système de stockage (250) de produits valorisés comprend un système de stockage automatisé.

12. Système de l'une quelconque des revendications précédentes, comprenant en outre un moyen d'identification pour harmoniser l'identification d'une palette avec l'identification des contenants (10) stockés sur la palette.
